# FASCICULE DE BREVET EUROPEEN

(11) **EP 0 546 424 B1**
(45) Date de publication et mention de la délivrance du brevet: **17.01.1996**
(21) Numéro de dépôt: 92120448.3
(22) Date de dépôt: 01.12.1992
(51) Int. Cl.: B65G 47/244

(54) **Dispositif de manutention et d'orientation d'objets plats disposés en paquets**
Einrichtung zum Handhaben und Ausrichten von gebündelten flachen Gegenständen
Device for handling and orienting bundled flat objects

(30) Priorité: 13.12.1991 FR 9115756
(43) Date de publication de la demande: 16.06.1993
(73) Titulaire: BOBST S.A., CH-1001 Lausanne (CH)
(72) Inventeur: Lucas, Jean-Jacques, F-33 730 Prechac (FR)
(74) Mandataire: Colomb, Claude

(56) Documents cités:
- EP-A- 0 257 438
- FR-A- 2 637 878

## Description

La présente invention concerne un dispositif de manutention et d'orientation d'objets plats disposés en paquets, notamment d'objets plats constitués de plaques ou de découpes de carton ou de carton ondulé, selon le préambule de la revendication 1 (FR-A-2 637 878).

Dans l'industrie de la transformation du carton ou du carton ondulé, il arrive fréquemment que l'on soit obligé de transporter des paquets de plaques de carton ou des découpes de boîtes pliantes d'un point à un autre dans une chaîne de fabrication, par exemple de transporter un paquet d'objets plats, d'une station à une autre d'une machine de production.

Pour effectuer cette opération de transport, on utilise généralement des convoyeurs motorisés du type à bande ou à rouleaux. Il arrive également qu'il soit nécessaire d'orienter le paquet à transporter de façon que celui-ci se présente dans une position bien définie à l'entrée de la station où il sera travaillé. Pour ce faire, on a déjà imaginé l'utilisation de tables tournantes à billes.

Le brevet français FR-A-2 637 878 concerne une telle table tournante à billes. Dans cette publication, les paquets d'objets plats sont transportés et orientés à l'aide d'un dispositif comportant un plan de transport équipé de billes.

Un disque central, lui aussi muni de billes, est agencé dans le plan de transport et est animé, sur commande, d'un mouvement vertical permettant, lorsqu'il occupe une position supérieure d'imprimer une rotation à la charge qu'il supporte.

La charge, c'est à dire le paquet d'objets plats, ayant été déplacée angulairement soit de 90°, soit de 180°, le disque central reprendra sa position inférieure et le paquet pourra être à nouveau déplacé linéairement dans la chaîne de production.

Les billes du plan de transport, c'est à dire aussi bien les billes du disque central que les billes de sa périphérie, sont entraînées à l'aide de deux tapis sans fin dont le brin supérieur, se déplaçant sur un organe de soutien, est en contact avec les billes du plan de transport et avec les billes du disque central lorsque celui-ci occupe sa position inférieure.

Il est également possible, avec un tel dispositif de piloter à la fois le déplacement linéaire des tapis sans fin et la rotation du disque central lorsqu'il se trouve en position inférieure pour obtenir une orientation angulaire et orthogonale du paquet transporté.

On connaît également des dispositifs dans lesquels les paquets d'objets plats sont déplacés latéralement à gauche ou à droite, tout en pouvant être orientés angulairement. Dans ces dispositifs, le déplacement latéral est assuré par un plateau rectangulaire à billes se déplaçant transversalement par rapport au sens de marche des organes d'entraînement des billes disposés immédiatement sous ledit plateau.

L'orientation angulaire des paquets d'objets plats est obtenue en utilisant des organes d'entraînement des billes composés de quatre sections motorisées individuellement. Cette disposition permet de jouer sur les sens d'entraînement de chacune des sections motorisées et par là d'autoriser aussi une orientation orthogonale et angulaire des paquets d'objets plats.

Le principal inconvénient de ce genre de dispositifs réside dans le fait que l'orientation du paquet transporté n'est pas exactement assurée et implique un important investissement en matériel électronique de commande augmentant ainsi le coût du dispositif. De plus, dans le premier dispositif décrit ci-avant, l'opération d'orientation du paquet doit s'effectuer lorsque le disque central est en position inférieure et il ne sera pas, ou difficilement, possible d'orienter un paquet dont les dimensions ne sont pas inscrites dans le diamètre du disque central.

En règle générale, dans la pratique, on combine les deux dispositifs susmentionnés de façon à réduire le coût et la complexité des organes électroniques de commande. Cette combinaison augmente cependant l'encombrement de cette section de la chaîne de production et provoque une perte de place importante dans l'usine de cartonnage.

Le but de l'invention est de proposer un dispositif de manutention et d'orientation d'objets plats disposés en paquets, qui remédie aux inconvénients précités.

A cet effet l'invention a pour objet un dispositif de manutention et d'orientation d'objets plats disposés en paquets, notamment d'objets plats constitués de plaques ou de découpes de carton ou de carton ondulé, comprenant les caractéristiques de la revendication 1.

Suivant un premier mode de réalisation du dispositif selon l'invention, les rouleaux du plan de transport sont entraînés par une courroie plate sur laquelle ils reposent par leur propre poids, ladite courroie plate étant disposée le long de l'une des parois latérales du dispositif et supportée par des galets placés dans l'axe vertical de chacun desdits rouleaux, et la table à billes entraînées est constituée par un cadre équipé, sur ses côtés s'étendant parallèlement aux rouleaux entraînés, de galets de guidage s'engageant dans des coulisses fixées contre les joues d'un berceau faisant face auxdits côtés du cadre, ledit berceau supportant aussi l'organe circulaire actionnant les billes entraînées disposées dans des traverses constituant la face supérieure de la table à billes.

Suivant une variante de réalisation le dispositif selon l'invention comprend un ensemble formé par les joues du berceau et le cadre, relié à des moyens de levage autorisant son déplacement vertical de bas en haut et de haut en bas ainsi qu'à des moyens de translation assurant le déplacement latéral dans les deux sens de la table à billes entraînées.

De préférence, les moyens de levage sont constitués par quatre vérins pneumatiques disposés aux quatre angles de l'ensemble formé par les joues du berceau et le cadre, lesdits vérins pneumatiques exerçant leur effet entre les traverses inférieures du bâti du dispositif.

Suivant une autre version, l'organe circulaire actionnant les billes entraînées est constitué par un disque dont la surface en contact permanent avec les billes est une surface plane qui peut être recouverte d'une couche de matière favorisant l'entraînement des billes.

D'autres caractéristiques avantageuses et avantages du dispositif selon l'invention ressortiront de la description d'une forme de réalisation qui va suivre, description donnée à titre d'exemple uniquement, à l'aide des dessins annexés dans lesquels :
- La figure 1 est une vue partielle, en plan, d'une chaîne de production incorporant un dispositif selon l'invention,
- La figure 2 est une vue en plan d'un dispositif de manutention et d'orientation,
- La figure 3 est une coupe transversale partielle, selon III-III, de la figure 2,
- La figure 4 est une coupe longitudinale partielle, selon IV-IV, de la figure 2,
- La figure 5 est une vue de détail, en coupe, dans une première position d'une portion du plan de transport, et
- La figure 6 est une vue de détail, en coupe, dans une seconde position d'une portion du plan de transport.

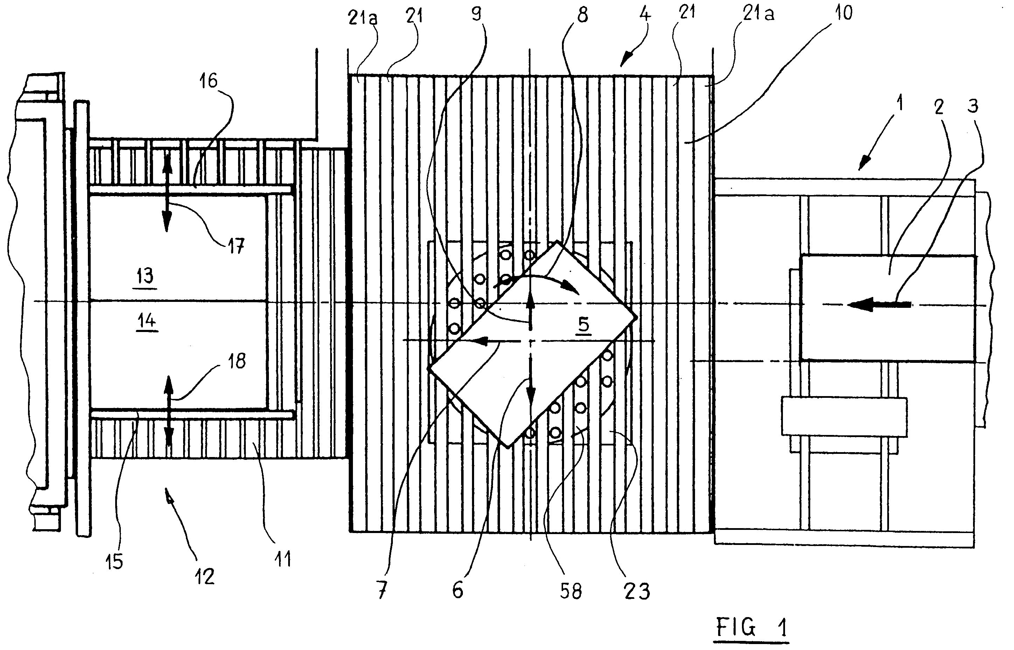

La chaîne de production de la figure 1 comprend un transporteur d'entrée 1 sur lequel se déplace, suivant le sens indiqué par la flèche 3, un paquet 2 d'objets plats. Ce transporteur d'entrée 1 est suivi par un dispositif de manutention et d'orientation 4 destiné à déplacer orthogonalement et angulairement le paquet 5 d'objets plats, cela dans les directions indiquées par les flèches 6, 7, 8 et 9. Le dispositif 4, après avoir traité les paquets arrivant sur son plan de transport 10, les distribuera, dans le sens indiqué par la flèche 7 sur le convoyeur d'entrée 11 d'un palettiseur 12. Sur le convoyeur d'entrée 11, les paquets d'objets plats occuperont les positions 13 et 14 et seront serrés les uns contre les autres à l'aide de deux volets redresseurs 15 et 16 animés d'un mouvement alternatif suivant le sens des doubles flèches 17 et 18.

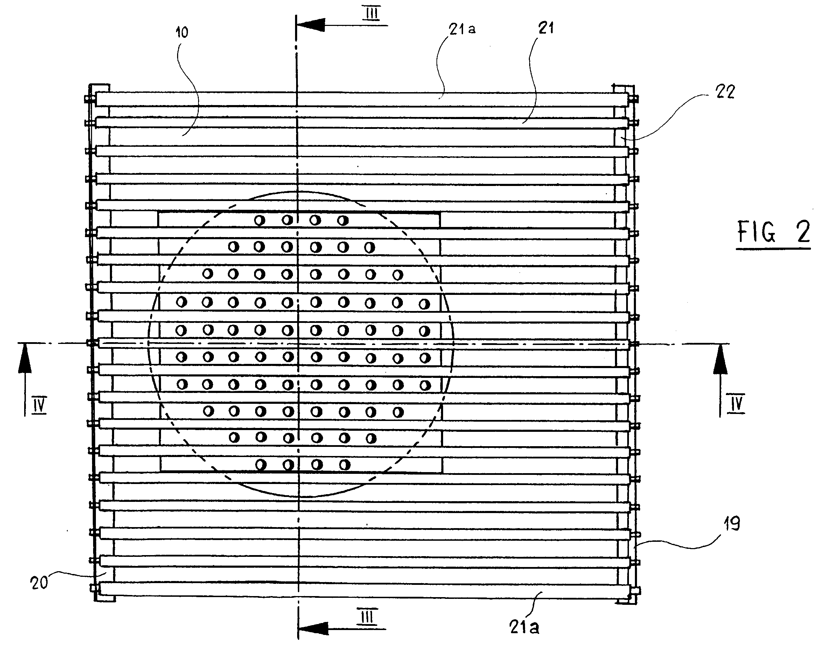

La figure 2 est une vue en plan du dispositif de manutention et d'orientation 4 de la figure 1. Ce dispositif comprend un plan de transport 10 composé d'une série de rouleaux 21 et 21a entraînés. Le plan de transport 10 est supporté par les deux parois latérales 19 et 20, reliées par des entretoises (non représentées sur cette figure), du bâti du dispositif. Une courroie plate 22 sert à entraîner les rouleaux 21 et 21a. Une table à billes entraînées 23 est incorporée au plan de transport 10 de façon à ce que ses billes occupent un espace laissé libre entre plusieurs rouleaux entraînés 21. Cette table à billes entraînées 23 est déplaçable, parallèlement aux rouleaux entraînés 21, selon les directions indiquées par les flèches 6 et 9 (voir fig. 1).

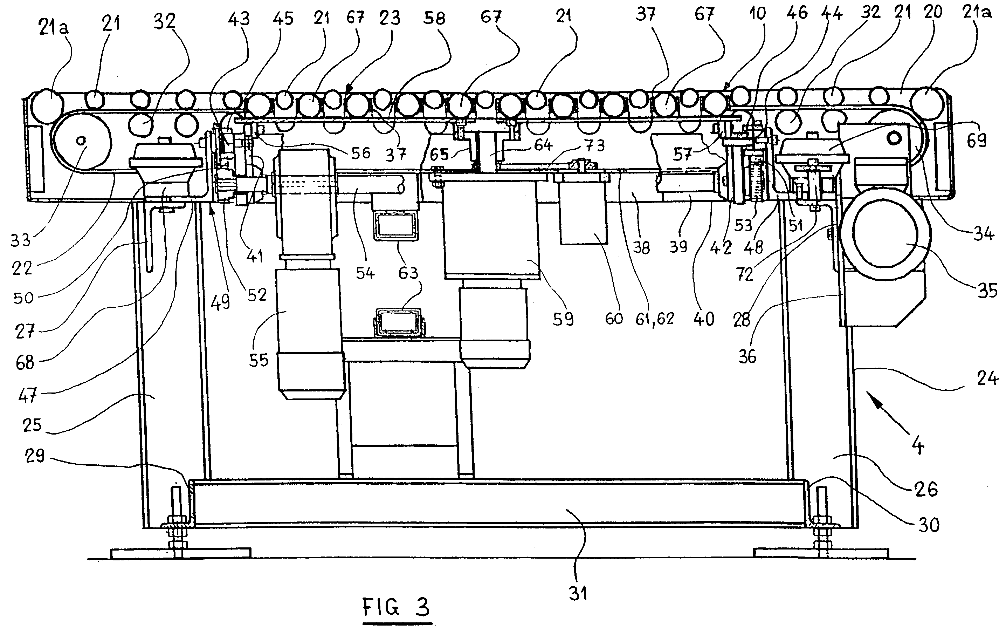

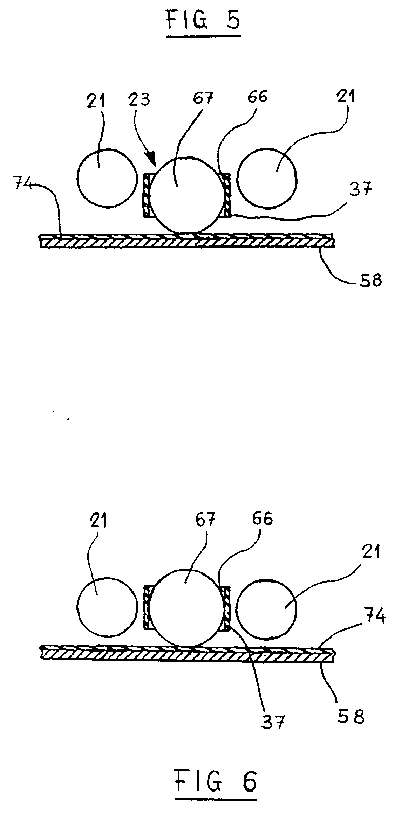

La figure 3 est une vue en coupe transversale partielle, selon III-III, de la figure 2, représentant en détail la construction du dispositif de manutention et d'orientation 4. Le plan de transport 10 est supporté par un bâti 24, en construction soudée, supportant deux parois latérales 19 et 20 (voir aussi fig. 2). Ce bâti 24 est formé par des poutrelles verticales 25 et 26 reliées, à leur partie supérieure par des entretoises 27 et 28, en fer équerre et à leur partie inférieure par d'autres entretoises 29 et 30. Les entretoises inférieures 29 et 30 sont réunies à l'aide d'une poutre 31. Dans cette exécution, les rouleaux entraînés 21 et 21a sont montés, de façon à pouvoir tourner librement, dans des encoches (non représentées) aménagées dans la partie supérieure des parois latérales 19 et 20. Ces rouleaux 21 et 21a sont actionnés en rotation au moyen d'une courroie plate 22 supportée, dans l'axe vertical desdits rouleaux 21, par des galets 32 et les poulies d'extrémité 33 et 34. La poulie 34 est la poulie entraînante et elle est commandée par un moteur-réducteur 35 fixé sur une plaque de base 36 vissée contre l'entretoise supérieure 28. La poulie 33 est la poulie entraînée de cet arrangement. La table à billes entraînées 23 est composée par une série de traverses 37, au nombre de dix dans le présent exemple, s'étendant parallèlement entre les rouleaux entraînés 21. Ces traverses 37 relient les deux joues 38 et 39 du cadre 40 et constituent la face supérieure de la table à billes 23. Des alésages 66 (voir fig. 5 et 6) sont percés dans les traverses 37 de façon à pouvoir recevoir les billes 67. Ces alésages 66 sont usinés dans les traverses 37 de telle sorte que toutes les billes 67 soient réparties dans la surface définie par la circonférence d'un disque rotatif 58 sur lequel elles reposent en permanence par leur propre poids (voir fig. 2). Les joues 38 et 39 sont également reliée entre elles par les poutrelles 41 et 42, formant ainsi le cadre 40. Le cadre 40 est équipé de galets de guidage 43 et 44 s'engageant dans une coulisse 45, respectivement 46, vissée contre les traverses 47 et 48 d'un berceau 49. La partie inférieure de chacune des coulisses 45 et 46 est munie d'une crémaillère 50, 51 sur laquelle engrènent les pignons 52, 53. Ces pignons 52, 53 sont clavetés à chacune des extrémités d'un arbre de commande 54 entraîné par un moteur-réducteur 55 fixé sur le cadre 40. Le cadre 40 est de plus équipé de galets de soutien 56, 57 destinés à maintenir la position du disque rotatif 58 entraîné, en son centre, par un moteur 59 piloté en rotation par un générateur d'impulsions 60. Le moteur 59 et le générateur d'impulsions 60 sont montés sur des cornières 61, 62 soudées entre les poutrelles 41, 42 du cadre 40. Le générateur d'impulsions 60 est entraîné par le moteur 59 à l'aide d'un ensemble poulies et courroie crantée 73. L'alimentation électrique du moteur-réducteur 55, du moteur 59 et du générateur d'impulsions 60 est assurée par le câble flexible 63. Le disque rotatif 58 est monté sur l'axe 64 du moteur 59 à l'aide d'un manchon claveté 65 vissé et centré sur le disque rotatif 58. Le berceau 49 est équipé de quatre vérins pneumatiques 68, 69, 70 et 71 disposés à chacun de ses quatre angles. Sur la figure 3, seuls les vérins pneumatiques 68 et 69 sont représentés. Ces vérins pneumatiques 68 à 71 sont ancrés dans l'aile supérieure des entretoises 27, 28 et leur piston est fixé sur l'aile inférieure des traverses 47, 48 du berceau 49 de façon à ce que celui-ci puisse être soulevé, lors de l'actionnement des vérins pneumatiques 68 à 71, de sorte que le plan défini par le sommet des billes 67 vienne occuper une position située sensiblement au-dessus du plan défini par les rouleaux entraînés 21, 21a. La course du berceau 49 est limitée par des butées 72, placées au voisinage de chacun des vérins pneumatiques 68 à 71.

Pour assurer le mouvement vertical de la table à billes 23, on pourrait aisément imaginer d'agir, au moyen d'un seul vérin, sur le moteur 59 monté dans un support coulissant autorisant le déplacement vertical de la table à billes 23 par rapport au bâti 24 supportant les rouleaux 21, 21a entraînés.

On pourrait aussi, dans une autre version d'exécution du dispositif, imaginer de déplacer verticalement, non pas la table 23 à billes 67 mais les rouleaux entraînés 21, 21a. Dans cette version, la table 23 à billes 67 serait solidaire du bâti 24, alors que les rouleaux entraînés 21, 21a seraient montés dans un cadre supporté par des vérins pneumatiques.

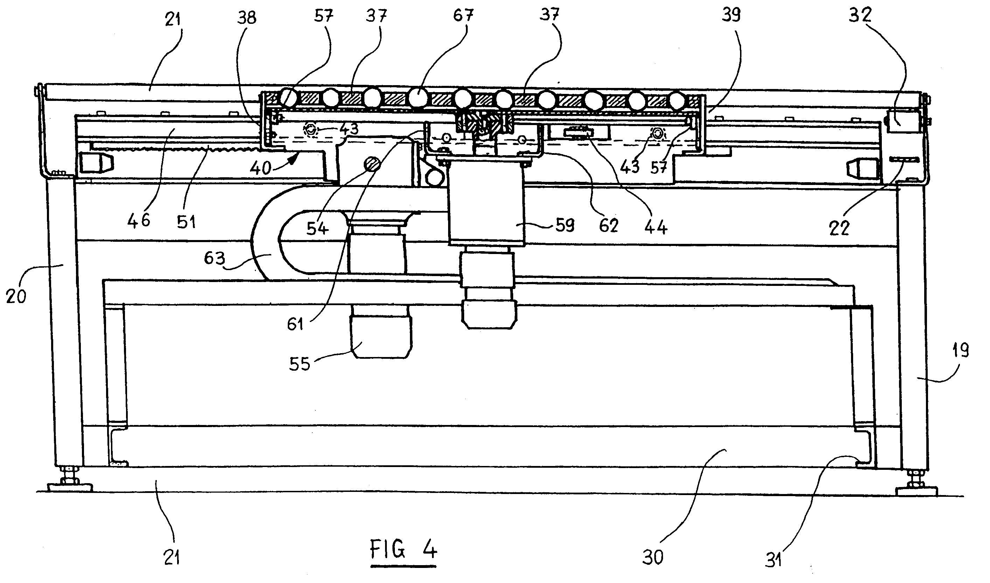

La figure 4 est une vue en coupe longitudinale partielle selon IV-IV de la figure 2 dans laquelle on retrouve les éléments de la figure 3 avec les mêmes signes de référence.

La figure 5 est une vue de détail, en coupe, montrant la position occupée par les billes 67 par rapport aux rouleaux entraînés 21 lorsque la table à billes 23 occupe sa position inférieure, et

La figure 6 est une vue de détail, en coupe, montrant la position occupée par les billes 67 par rapport aux rouleaux entraînés 21 lorsque la table à billes 23 occupe sa position supérieure.

Le disque rotatif 58, de préférence réalisé en alliage d'aluminium, peut avantageusement être recouvert d'une couche 74 de matière favorisant l'entraînement des billes 67. Cette couche peut être un polymère. On peut également imaginer d'usiner, dans la face supérieure du disque rotatif, sur le chemin de passage des billes 67, une série de rainures concentriques de section correspondant au rayon des billes 67 pour améliorer leur entraînement.

Le fonctionnement du dispositif sera maintenant décrit en se référant à la figure 1.

Le paquet 2 d'objets plats est entraîné par le transporteur d'entrée 1, dans le sens indiqué par la flèche 3, jusque sur le plan de transport 10 du dispositif de manutention et d'orientation 4. Les rouleaux entraînés 21, 21a de celui-ci sont mis en action jusqu'à ce que le paquet 2 vienne en 5 au-dessus de la table à billes 23. La position 5 du paquet 2, sur la table à billes 23, est déterminée, par exemple, par des cellules photo-électriques (non représentées). A l'instant où le paquet 2 est en position voulue au-dessus de la table à billes 23, on stoppe l'entraînement des rouleaux 21, 21a. Dans un premier temps, on actionne les vérins pneumatiques 68 à 71 (voir fig. 3) et l'on déplace, au choix, la table à billes 23 dans l'une des directions indiquées par les flèches 6 ou 9. Le paquet 2, en position 5, ayant été déplacé latéralement jusqu'à une position désirée pouvant être contrôlée au moyen de cellules photo-électriques ou de capteurs de position (non représentés), les vérins pneumatiques 68 à 71 sont relâchés et les rouleaux 21, 21a sont remis en mouvement de façon à entraîner le paquet 2, de sa position 5 à une position 13 ou 14, cela dans le sens indiqué par la flèche 7, jusque sur le convoyeur d'entrée 11 du palettiseur 12. Lors de ce genre d'opération, aucun retournement du paquet d'objets plats n'aura eu lieu. Il aura seulement subi une translation pour l'amener soit à droite soit à gauche du convoyeur d'entrée 11 du palettiseur 12.

Il arrive que l'on doive cependant retourner le paquet de 90 ou 180° tout en le translatant à droite et à gauche du convoyeur d'entrée 11. Pour ce faire, le paquet d'objets plats ayant été acheminé au-dessus de la table à billes 23, celle-ci ayant été soulevée, on actionne en rotation le disque rotatif 58 (voir aussi fig. 3 et 4) de la quantité nécessaire à l'orientation désirée, ici 180°, cela en pilotant le moteur 59 à l'aide du générateur d'impulsions 60. La rotation du disque rotatif 58 peut indifféremment avoir lieu dans un sens ou dans l'autre comme l'indique la flèche 8. Il suffit pour cela d'utiliser un moniteur de pilotage du moteur 59 approprié. Il est aussi possible de n'effectuer qu'une orientation angulaire du paquet d'objets plats sans déplacement latéral dans un sens ou dans l'autre, par exemple pour des paquets ayant une base de grandes dimensions ou pour des impératifs de disposition des paquets sur le convoyeur 11 du palettiseur 12.

Il est aussi possible de ne retourner qu'un paquet sur deux de façon à réaliser une disposition en quinconce, des paquets, sur le convoyeur 11. Cette disposition en quinconce permet de consolider les empilages de couches de paquets qui seront réalisés par la suite dans le palettiseur 12.

En résumé, le dispositif de manutention et d'orientation qui vient d'être décrit permet pratiquement toutes les combinaisons de couches de paquets d'objets plats à l'aide d'une seule station de manutention et d'orientation.

Enfin, l'invention n'est évidemment pas limitée au mode de réalisation représenté et décrit ci-avant mais en couvre toutes les variantes notamment en ce qui concerne les moyens pour appliquer aux paquets un déplacement vertical, latéral ou rotatif.

## Revendications

1. Dispositif de manutention et d'orientation d'objets plats disposés en paquets, notamment d'objets plats constitués de plaques ou de découpes de carton ou de carton ondulé, comprenant un plan de transport (10) placé entre les parois latérales (19, 20) d'un bâti (24) et constitué de deux organes de transfert déplaçables verticalement l'un par rapport à l'autre, l'un desdits organes de transfert étant constitué par une table (23) à billes entraînées (67), ledit plan de transport (10) étant actionné par des moyens de commande disposés au-dessous de celui-ci, caractérisé en ce que lesdits organes de transfert sont également déplaçables latéralement l'un par rapport à l'autre, l'autre desdits organes comportant une série de rouleaux (21), entraînés, espacés les uns des autres et entre lesquels sont montées lesdites billes entraînées (67), de telle sorte que leur sommet peut occuper une position située au-dessous et au-dessus du plan défini par les rouleaux entraînés, en ce que lesdits moyens de commande sont constitués d'une part par un organe circulaire d'actionnement des billes entraînées (67) dont la face supérieure est en contact permanent avec lesdites billes entraînées (67) et d'autre part par un organe d'entraînement des rouleaux (21, 21a) et en ce que le mouvement de chacun des moyens de commande est piloté en fonction du déplacement latéral et/ou de l'orientation que l'on désire communiquer au paquet d'objets plats reposant sur le plan de transport (10).

2. Dispositif selon la revendication 1, caractérisé en ce que la table (23) à billes entraînées (67) est déplaçable verticalement, de bas en haut et de haut en bas, et latéralement, dans un sens ou dans l'autre, par rapport aux rouleaux (21, 21a) entraînés.

3. Dispositif selon la revendication 1, caractérisé en ce que les rouleaux (21, 21a) sont déplaçables verticalement, de bas en haut et de haut en bas, par rapport à la table (23) à billes entraînées (67) et en ce que la table (23) à billes entraînées (67) est déplaçable latéralement, dans un sens ou dans l'autre, par rapport auxdits rouleaux (21, 21a) entraînés.

4. Dispositif selon la revendication 1, caractérisé en ce que l'organe d'entraînement des rouleaux (21, 21a), du plan de transport (10), est constitué par une courroie plate (22) sur laquelle ils reposent par leur propre poids, ladite courroie plate (22) étant disposée le long de l'une des parois latérales (19, 20) du bâti (24) du dispositif et supportée par des galets (32) placés dans l'axe vertical de chacun desdits rouleaux (21).

5. Dispositif selon la revendication 1, caractérisé en ce que l'organe circulaire d'actionnement des billes entraînées (67) est constitué par un disque rotatif (58) dont la surface en contact permanent avec les billes (67) est une surface plane.

6. Dispositif selon la revendication 1, caractérisé en ce que la table (23) à billes entraînées (67) est constituée par un cadre (40) équipé, sur ses côtés s'étendant parallèlement aux rouleaux (21, 21a) entraînés, de galets de guidage (43, 44) s'engageant dans des coulisses (45, 46) fixées contre les traverses (47, 48) d'un berceau (49), faisant face audits côtés du cadre (40), ledit berceau (49) supportant aussi l'organe circulaire (58) actionnant les billes entraînées (67) disposées dans des traverses (37) constituant la face supérieure de la table à billes (23).

7. Dispositif selon la revendication 6, caractérisé en ce que l'ensemble formé par les traverses (47, 48) du berceau (49) et le cadre (40) est relié à des moyens de levage autorisant son déplacement vertical de bas en haut et de haut en bas et à des moyens de translation assurant le déplacement latéral dans les deux sens de la table (23) à billes entraînées (67).

8. Dispositif selon la revendication 7, caractérisé en ce que les moyens de levage sont constitués par quatre vérins pneumatiques (68 à 71) disposés aux quatre angles de l'ensemble formé par les traverses (47, 48) du berceau (49) et le cadre (40), lesdits vérins pneumatiques (68 à 71) exerçant leur effet entre les traverses (47, 48) du berceau (49) et les entretoises (27, 28) du bâti (24).

9. Dispositif selon la revendication 5, caractérisé en ce que la surface du disque rotatif (58), en contact permanent avec les billes (67), est munie de rainures dans lesquelles les billes (67) peuvent rouler.

10. Dispositif selon la revendication 9, caractérisé en ce que la surface du disque rotatif (58), en contact permanent avec les billes (67) est recouverte d'une couche (74) de matière favorisant l'entraînement des billes (67).

## Claims

1. Device destined to handle and orientate flat workpieces arranged in batches and specifically so flat workpieces consisting of board blanks or corrugated board plates, which comprises a carrier plane surface (10) located between the lateral walls (19, 20) of a structure (24), and consisting of two transfer organs which are vertically movable with regard to one another, one of the sair transfer organ consisting of a table (23) with driven balls (67), the said carrier plane surface (10) being actuated by control means arranged underneath it, characterized by the fact that the said transfer organs are shiftable sidewise with regard to one another, one of the said organs comprising a series of driven rollers (21) distanced from one another and between which are located the said driven balls (67), so that their summit may occupy a position located underneath and above the plane defined by the driven rollers, by the fact that the said control means consist, on the one hand, of a circular element destined to actuate the driven balls (67), the upper side of the said circular element being in permanent contact with the said driven balls (67), as well as, on the other hand, of an element driving the rollers (21, 21a), and by the fact that the movement of each of the control means is controlled according to the sidewise shift and/or the orientation to be given to the batch of flat workpieces resting on the carrier plane surface (10).

2. Device according to claim 1, characterized by the fact that the table (23) equipped with driven balls (67) is movable upwards and downwards as well as shiftable sidewise in the one or the other direction with regard to the driven rollers (21, 21a).

3. Device according to claim 1, characterized by the fact that the rollers (21, 21a) are movable upwards and downwards with regard to the table (23) equipped with driven balls (67) and that the said table (23) equipped with driven balls (67) is shiftable sidewise in the one or the other direction with regard to the driven rollers (21, 21a).

4. Device according to claim 1, characterized by the fact that the means driving the rollers (21, 21a) of the carrier plane surface (10) consists of a flat belt (22) onto which the said rollers rest owing to their proper weight, the said flat belt (22) being arranged along one of the lateral walls (19, 20) of the structure (24) of the device and supported by belt guides (32) arranged in the vertical axis of each of the said rollers (21).

5. Device according to claim 1, characterized by the fact that the circular element destined to actuate the driven balls (67) consists of a swivelling disk (58) whose side permanently in contact with the balls (67) is a plane surface.

6. Device according to claim 1, characterized by the fact that the table (23) equipped with driven balls (67) consists of a frame (40) provided on its sides extending parallelly to the driven rollers (21, 21a) with guiding rollers (43, 44) engaging in sliding rails (45, 46) fixed against the crossbars (47, 48) of a cradle (49) facing the said sides of the frame (40), the said cradle (49) supporting also the circular element (58) destined to actuate the driven balls (67) themselves arranged on crossbars (37) making up the upper side of the table (23).

7. Device according to claim 6, characterized by the fact that the assembly consisting of the crossbars (47, 48) of the cradle (49) and the frame (40) is connected, on the one hand, to hoisting means which authorize its upward and downward movement, and, on the other hand, to translation means enabling the sidewise shift in the one or the other direction of the table (23) equipped with driven balls (67).

8. Device according to claim 7, characterized by the fact that the hoisting means consist of four pneumatic jacks (68, 69, 70, 71) arranged in the four angles of the assembly comprising the crossbars (47, 48) of the cradle (49) and the frame (40), the said pneumatic jacks (68 to 71) applying their effect between the crossbars (47, 48) of the cradle (49) and the struts (27, 28) of the structure (24).

9. Device according to claim 5, characterized by the fact that the surface of the swivelling disk (58) which is permanently in contact with the balls (67) is provided with grooves in which the balls (67) can roll.

10. Device according to claim 9, characterized by the fact that the surface of the swivelling disk (58) which is permanently in contact with the balls (67) is covered with a layer (74) of fabric contributing to the drive of the balls (67).

## Patentansprüche

1. Vorrichtung zum Handhaben und Ausrichten von gebündelten flachen Gegenständen, vor allem von flachen Gegenständen aus Karton- oder Wellpappenplatten oder -zuschnitten, mit einer Transportebene (10) zwischen den beiden Seitenwänden (19, 20) eines Gestells (24), die aus zwei vertikal zueinander verschiebbaren Förderorganen besteht, wobei eines der besagten Förderorgane aus einem Tisch (23) mit angetriebenen Kugeln (67) besteht, und die besagte Transportebene (10) durch unter der besagten Ebene angeordnete Antriebsmittel betätigt wird, dadurch gekennzeichnet, dass die besagten Förderorgane ihrerseits zueinander seitlich verschoben werden können, wozu das andere der besagten Förderorgane eine Reihe voneinander getrennter angetriebener Rollen (21) umfasst, zwischen welchen die besagten angetriebenen Kugeln (67) angeordnet sind, so dass ihre Spitze eine Stellung einnehmen kann, die sich über und unter der durch die angetriebenen Rollen definierten Ebene befindet, dass die besagten Antriebsmittel einerseits aus einem Umlauforgan zur Betätigung der angetriebenen Kugeln (67), dessen obere Fläche dauernd mit den besagten angetriebenen Kugeln (67) in Kontakt steht und andererseits aus einem Organ zum Antrieb der Rollen (21, 21a) besteht, und dass die Bewegung der einzelnen Antriebsmittel entsprechend der seitlichen Verschiebung und/oder der Ausrichtung, die dem Bündel der flachen Gegenstände auf der Transportebene (10) zu vermitteln ist, gesteuert wird.

2. Vorrichtung gemäss Patentanspruch 1, dadurch gekennzeichnet, dass der Tisch (23) mit angetriebenen Kugeln (67) vertikal und seitlich in bezug auf die angetriebenen Rollen (21, 21a) beliebig verschoben werden kann.

3. Vorrichtung gemäss Patentanspruch 1, dadurch gekennzeichnet, dass die Rollen (21, 21a) vertikal in bezug auf den Tisch (23) mit angetriebenen Kugeln (67) und dass der Tisch (23) mit angetriebenen Kugeln (67) seitlich in bezug auf die besagten angetrieben Rollen (21, 21a) beliebig verschoben werden können.

4. Vorrichtung gemäss Patentanspruch 1, dadurch gekennzeichnet, dass das Antriebsmittel der Rollen (21, 21a) der Transportebene (10) aus einem flachen Riemen (22) besteht, auf welchem sie durch ihr eigenes Gewicht aufliegen, wobei der besagte flache Riemen (22) entlang einer der Seitenwände (19, 20) des Gestells (24) der Vorrichtung angeordnet ist und durch die Laufrollen (32), die in der Vertikalachse der besagten Rollen (21) angebracht sind, abgestützt wird.

5. Vorrichtung gemäss Patentanspruch 1, dadurch gekennzeichnet, dass das Umlauforgan zur Betätigung der angetrieben Kugeln (67) aus einer Drehscheibe (58) besteht, deren Oberfläche, die mit den Kugeln (67) dauernd in Kontakt steht, eine ebene Fläche ist.

6. Vorrichtung gemäss Patentanspruch 1, dadurch gekennzeichnet, dass der Tisch (23) mit angetriebenen Kugeln (67) aus einem Rahmen (40) besteht, der an seinen zu den angetriebenen Rollen (21, 21a) parallel verlaufenden Seiten mit Führungsrollen (43, 44) ausgerüstet ist, die in Gleitschienen (45, 46) an den Querträgern (47, 48) einer Wiege (49) laufen, die den Seiten des Rahmens (40) gegenüberliegt und die besagte Wiege (49), die auch das Umlauforgan (58) zur Betätigung der angetriebenen Kugeln (67) in den Querträgern (37) tragt, die obere Seite des Kugeltisches (23) bildet.

7. Vorrichtung gemäss Patentanspruch 6, dadurch gekennzeichnet, dass die Baugruppe aus den Querträgern (47, 48) der Wiege (49) und dem Rahmen (40) mit Hebemitteln zum vertikalen Heben und Senken sowie mit Parallelverschiebungsmitteln zur seitlichen Verschiebung des Tisches (23) mit angetriebenen Kugeln (67) in beiden Richtungen verbunden ist.

8. Vorrichtung gemäss Patentanspruch 7, dadurch gekennzeichnet, dass die Hebemittel aus vier pneumatischen Druckzylindern (68 bis 71) an den vier Ecken der Baugruppe bestehen, die aus den Querträgern (47, 48) der Wiege (49) und dem Rahmen (40) gebildet werden, wobei die besagten pneumatischen Druckzylinder (68 bis 71) ihre Wirkung zwischen den Querträgern (47, 48) der Wiege (49) und zwischen den Verstrebungen (27, 28) des Gestells (24) ausüben.

9. Vorrichtung gemäss Patentanspruch 5, dadurch gekennzeichnet, dass die Oberfläche der Drehscheibe (58), die in Dauerkontakt mit den Kugeln (67) steht, mit Rillen versehen ist, in welchen die Kugeln (67) laufen können.

10. Vorrichtung gemäss Patentanspruch 9, dadurch gekennzeichnet, dass die Oberfläche der Drehscheibe (58), die in Dauerkontakt mit den Kugeln (67) steht, mit einer Beschichtung (74) aus einem Material versehen ist, das den Antrieb der Kugeln (67) begünstigt.
